# EUROPEAN PATENT APPLICATION

(11) **EP 4 142 415 A1**
(43) Date of publication of application: **01.03.2023**
(21) Application number: 21793469.4
(22) Date of filing: 19.04.2021
(51) Int. Cl.: H04W 74/08, H04W 16/14

(54) **TRANSMISSION CONFIRMATION METHOD, TERMINAL DEVICE AND TRANSMISSION NODE**

(30) Priority: 21.04.2020 CN 202010318706
(71) Applicant: Vivo Mobile Communication Co., Ltd., Dongguan, Guangdong 523863 (CN)
(72) Inventor: JIANG, Lei, Dongguan, Guangdong 523863 (CN); LI, Gen, Dongguan, Guangdong 523863 (CN)
(74) Representative: Petraz, Gilberto Luigi
(86) International application number: PCT/CN2021/088170
(87) International publication number: WO 2021/213335

(57) **Abstract**

The present invention discloses a transmission confirmation method, a terminal device, and a transmission node. The transmission confirmation method is applied to a first terminal. The method includes: monitoring a first physical control channel based on monitoring configuration information of the first physical control channel; obtaining first control information transmitted by a transmission node on the first physical control channel, where the first control information includes RTS information for a plurality of target terminal devices, and the plurality of target terminal devices include the first terminal; and sending CTS information on a second physical control channel based on the RTS information.

## Description

### CROSS-REFERENCE

The present invention claims priority to Chinese Patent Application No. 202010318706.8, filed with the Chinese National Intellectual Property Administration on April 21, 2020 and entitled "TRANSMISSION CONFIRMATION METHOD, TERMINAL DEVICE, AND TRANSMISSION NODE", which is incorporated herein by reference in its entirety.

### TECHNICAL FIELD

The present invention relates to the field of communications, and in particular, to a transmission confirmation method, a terminal device, and a transmission node.

### BACKGROUND

In a future communications system, a shared spectrum, for example, in an unlicensed band (unlicensed band), can be used as a supplement to a licensed band (licensed band) to help an operator expand a service. To keep consistent with the NR deployment and maximize unlicensed access based on new radio (New Radio, NR), an unlicensed band may work in frequency bands of 5 GHz, 37 GHz, and 60 GHz. Unlicensed bands can be used for a plurality of radio access technologies (RATs), for example, wireless fidelity (Wi-Fi), radars, and long term evolution licensed-assisted access (Long Term Evolution Licensed-Assisted Access, LTE-LAA). Therefore, in some countries or regions, the use of unlicensed bands has to be subject to regulations (regulation) to ensure fair use of the resources among all devices, for example, regulations such as listen before talk (listen before talk, LBT) or a maximum channel occupancy time (Maximum Channel Occupancy Time, MCOT). When a transmission node needs to send information, LBT needs to be performed for energy detection (energy detection, ED) on the surrounding nodes. When detected energy is lower than a threshold, it is considered that a channel is idle (idle), and the transmission node can perform sending. Otherwise, it is considered that the channel is busy, and the transmission node cannot perform sending. The transmission node may be a base station, LTE (User Equipment, LTE), a Wi-Fi access point (Access Point, AP), or the like. After transmission of the transmission node starts, a channel occupancy time (Channel Occupancy Time, COT) that the transmission takes cannot exceed an MCOT.

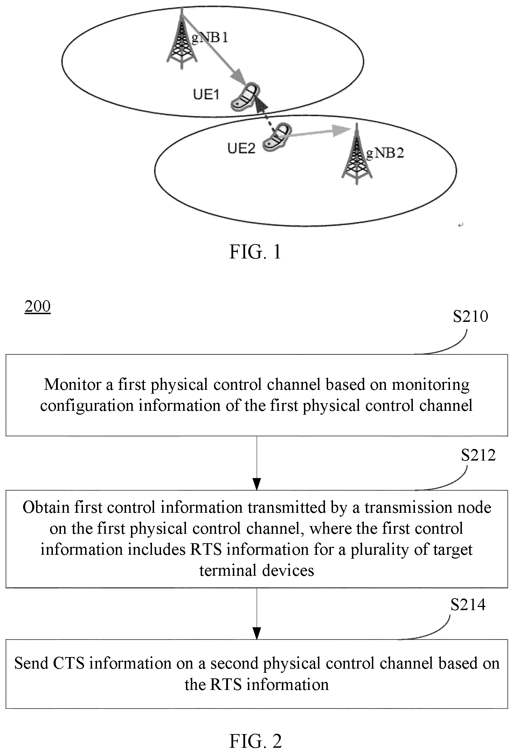

LBT can help with some problems of channel interference, but since LBT is performed by a transmitter node, LBT cannot help with the hidden node problem of a receiver node. As shown in FIG. 1, before sending data, a base station gNB1 performs LBT, and detects that a channel is idle. Therefore, gNB1 sends data to UE1, and UE1 receives the data. In this case, when UE2 needs to send data and performs LBT, because gNB 1 is relatively far, and UE1 is receiving data, UE2 detects that the channel is idle, and starts to send data. However, because UE1 and UE2 are very close to each other, UE1 may receive information sent by UE2, and in this case, UE2 is a hidden node of UE1. When receiving data from gNB1, UE1 is interfered by the hidden node (UE2).

### SUMMARY

The purpose of embodiments of the present invention is to provide a transmission confirmation method, a terminal device, and a transmission node, to solve a problem of interference caused by hidden nodes in a spectrum sharing scenario.

According to a first aspect, a transmission confirmation method is provided and applied to a first terminal. The method includes: monitoring a first physical control channel based on monitoring configuration information of the first physical control channel; obtaining first control information transmitted by a transmission node on the first physical control channel, where the first control information includes request to send (Request To Send, RTS) information for a plurality of target terminal devices, and the plurality of target terminal devices include the first terminal; and sending Confirm to Send (Confirm To Send, CTS) information on a second physical control channel based on the RTS information.

According to a second aspect, an information transmission method is provided and applied to a transmission node. The method includes:
transmitting first control information at a monitoring position of a first physical control channel, where the first control information includes RTS information for a plurality of target terminal devices;
receiving CTS information returned by at least one target terminal device in the plurality of target terminal devices on a second physical control channel; and
scheduling a third physical control channel in a search space corresponding to the at least one target terminal device in the plurality of target terminal devices for data transmission to the at least one target terminal device.

According to a third aspect, a terminal device is provided and includes a monitoring module, configured to monitor a first physical control channel based on monitoring configuration information of the first physical control channel; an obtaining module, configured to obtain first control information transmitted by a transmission node on the first physical control channel, where the first control information includes request to send RTS information for a plurality of target terminal devices, and the plurality of target terminal devices include the terminal device; and a sending module, configured to send confirm to send CTS information on a second physical control channel based on the RTS information.

According to a fourth aspect, a transmission node is provided and includes: a transmission module, configured to transmit first control information at a monitoring position of a first physical control channel, where the first control information includes RTS information for a plurality of target terminal devices; a receiving module, configured to receive CTS information returned by at least one target terminal device in the plurality of target terminal devices on a second physical control channel; and a scheduling module, configured to schedule a third physical control channel in a search space corresponding to the at least one target terminal device in the plurality of target terminal devices for data transmission to the at least one target terminal device.

According to a fifth aspect, a terminal device is provided and includes a memory, a processor, and a computer program stored in the memory and executable on the processor, and when the computer program is executed by the processor, steps of the method according to the first aspect are implemented.

According to a sixth aspect, a transmission node is provided and includes a memory, a processor, and a computer program stored in the memory and executable on the processor, and when the computer program is executed by the processor, steps of the method according to the second aspect are implemented.

According to a seventh aspect, a computer-readable storage medium is provided. The computer-readable storage medium stores a computer program, and when the computer program is executed by a processor, steps of the method according to the first aspect or the second aspect are implemented.

In the embodiments of the present invention, the first terminal monitors the first physical control channel, and obtains the first control information transmitted by the transmission node on the first physical control channel. The first control information includes the RTS information for the plurality of target terminal devices, and the terminal device sends the CTS information on the second physical control channel based on the RTS information to complete RTS/CTS handshaking. Other devices that have not completed RTS/CTS handshaking will not try transmitting. In this way, interference caused by hidden nodes surrounding the first terminal is avoided, and effectiveness of using a shared spectrum in an NR system is improved.

### BRIEF DESCRIPTION OF DRAWINGS

The accompanying drawings described herein are intended to provide a further understanding of the present invention, and constitute a part of the present invention. The illustrative embodiments of the present invention and descriptions thereof are intended to describe the present invention, and do not constitute limitations on the present invention.
FIG. 1 is a schematic diagram of a scenario of a hidden node in a related technology;
FIG. 2 is a schematic flowchart of a transmission confirmation method according to an embodiment of the present invention;
FIG. 3 is a schematic flowchart of an information transmission method according to an embodiment of the present invention;
FIG. 4 is another schematic flowchart of an information transmission method according to an embodiment of the present invention;
FIG. 5 is a schematic structural diagram of a terminal device according to an embodiment of the present invention;
FIG. 6 is a schematic structural diagram of a transmission node according to an embodiment of the present invention;
FIG. 7 is a schematic structural diagram of a terminal device according to an embodiment of the present invention; and
FIG. 8 is a schematic structural diagram of a transmission node according to an embodiment of the present invention.

### DESCRIPTION OF EMBODIMENTS

The following clearly and completely describes the technical solutions in embodiments of the present invention in conjunction with the accompanying drawings in the embodiments of the present invention. Apparently, the described embodiments are some of rather than all embodiments of the present invention. All other embodiments obtained by those of ordinary skill in the art based on the embodiments of the present invention without creative efforts shall fall within the protection scope of the present invention.

The technical solutions of the present invention may be applied to various communications systems, such as a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE)/long term evolution-advanced (Long Term Evolution-advanced, LTE-A) system, and a new radio (New Radio, NR) system.

User equipment (User Equipment, UE), also referred to as a terminal device, a mobile terminal (Mobile Terminal), a mobile user device, or the like, may communicate with one or more core networks through a radio access network (Radio Access Network, RAN). The user equipment may be a mobile terminal, for example, a mobile phone (also referred to as a "cell" phone) and a computer with a mobile terminal, for example, a portable, pocket-sized, handheld, computer built-in, or vehicle-mounted mobile apparatus that exchanges language and/or data with the radio access network.

A transmission node may be a base transceiver station (Base Transceiver Station, BTS) in GSM or CDMA, a NodeB (NodeB) in WCDMA, an evolved NodeB (evolutional NodeB, eNB or e-NodeB) in LTE or a 5G gNodeB (gNB), or a terminal or Wi-Fi access point that transmits data to other terminals. This is not limited in the present invention. However, for ease of description, the gNB is used as an example in the following embodiments for description.

The technical solutions provided in the embodiments of the present invention are described in detail below in conjunction with the accompanying drawings.

FIG. 2 is a schematic flowchart of a transmission confirmation method according to an embodiment of the present invention. The method 200 may be performed by the first terminal. In other words, the method may be performed by software or hardware installed on the first terminal. As shown in FIG. 2, the method may include the following steps.

S210: monitoring a first physical control channel based on monitoring configuration information of the first physical control channel.

In this embodiment of the present invention, the monitoring configuration information of the first physical control channel may be pre-configured, for example, may be configured by a network side through signaling, or may be agreed with the network side in advance.

S212: obtaining first control information transmitted by a transmission node on the first physical control channel, where the first control information includes RTS information for a plurality of target terminal devices, and the plurality of target terminal devices include the first terminal.

In this embodiment of the present invention, the first control information may include the RTS information from the transmission node for the plurality of target terminal devices, and the RTS information may indicate duration of a channel occupancy time on a shared frequency and identification information of the plurality of target terminal devices.

S214: sending CTS information on a second physical control channel based on the RTS information.

In this embodiment of the present invention, after obtaining the first control information, the first terminal is determined to be a target terminal device based on the RTS information in the first control information, and therefore sends the CTS information on the second physical control channel. The CTS information may indicate duration of a channel occupancy time.

According to the foregoing technical solution provided in this embodiment of the present invention, the first terminal monitors the first physical control channel, and obtains the first control information transmitted by the transmission node on the first physical control channel. The first control information includes the RTS information for the plurality of target terminal devices, and the terminal device sends the CTS information on the second physical control channel based on the RTS information to complete RTS/CTS handshaking, and can perform information transmission. Other devices that have not completed RTS/CTS handshaking, after receiving the CTS information, may learn, based on the duration of the channel occupancy time carried in the CTS information, that a shared spectrum is occupied within the duration of the channel occupancy time, so that the devices will not try transmitting. In this way, interference caused by hidden nodes surrounding the first terminal is avoided.

In this embodiment of the present invention, the first physical control channel may be in a format similar to that of a physical downlink control channel (PDCCH) format. Therefore, in this embodiment of the present invention, the first physical control channel includes, but is not limited to, an RTS group common physical downlink control channel (RTS Group Common PDCCH, RTS-GC-PDCCH), an RTS common physical downlink control channel (RTS Common PDCCH, RTS-C-PDCCH) specific for RTS transmission, and an RTS UE-specific physical downlink control channel (RTS-UE-Specific PDCCH). The RTS may be carried on the RTS-GC-PDCCH or the RTS-C-PDCCH specific for RTS transmission, or partially carried on the RTS-GC-PDCCH or the RTS-C-PDCCH and partially carried on the RTS-UE-specific PDCCH, and sent to a plurality of target UEs.

The second physical control channel may be in a format similar to that of a PUCCH format. The CTS may be carried on a CTS PUCCH specific for CTS transmission, an existing PUCCH, or a CTS PUCCH similar to a PUCCH format.

In a possible implementation, the first control information may be in a pre-specified format, and may include at least one of the following: common indication domain and user indication domain. The user indication domain may be one or more. That is, in this implementation, the RTS information for the plurality of target terminal devices is indicated by the common indication domain and/or the user indication domain in the first control information.

In the foregoing possible implementation, optionally, the common indication domain may include at least one of the following:
(1) first indication information used to indicate duration of a channel occupancy time, that is, duration of a time of occupying a channel in a shared band for current data transmission;
(2) second indication information used to indicate quasi-colocation (Quasi Co-Location, QCL), where the QCL is QCL used by the transmission node for obtaining a channel on a shared spectrum; and
(3) third indication information used to indicate a target terminal device that has a request for transmission, that is, indicate a target terminal device to which data needs to be transmitted.

In the foregoing optional implementation, the third indication information may include one of the following: (1) a list of identification information of the target terminal devices, where the identification information of the target terminal devices includes radio network temporary identifiers (Radio Network Temporary Identifier, RNTI) of the target terminal devices or identifiers that are configured by the target terminal devices and that are in a terminal device group; and (2) a bitmap, where each bit in the bitmap is used to indicate whether one terminal device or one group of terminal devices is the target terminal devices. Optionally, each bit in the bitmap is used to indicate whether one terminal device or one group of terminal devices in groups of terminal devices is the target terminal devices. For example, one terminal device group includes 10 terminal devices. In this case, a bitmap of 10 bits may be used to separately indicate whether each terminal device is in the target terminal devices. Each bit corresponds to one terminal device. For example, when a value of the corresponding bit is 1, it is indicated that the terminal device is a target terminal device.

In the foregoing possible implementation, each target terminal device may correspond to one user indication domain, and related information is indicated by using one user indication domain to a corresponding target terminal device.

Optionally, the user indication domain may include at least one of the following:
(1) resource indication information of the second physical control channel, where the resource indication information includes, but is not limited to, one of the following: time information and a PUCCH resource indicator (PUCCH Resource Indicator, PRI) that are of the second physical control channel;
(2) monitoring indication information of a third physical control channel, where the third physical control channel is used to schedule data from the transmission node to the terminal devices, where the monitoring indication information includes, but is not limited to, time domain information and a search space identifier that are of the third physical control channel; and
(3) sending indication information of the second physical control channel. The sending indication information includes, but is not limited to, a format and spatial information (Spatial info) that are of the second physical control channel.

In a possible implementation, the common indication domain is carried on the RTS-GC-PDCCH or the RTS-C-PDCCH, and/or the user indication domain is carried on the RTS-UE-specific PDCCH. Alternatively, both the common indication domain and the user indication domain are carried on the RTS-GC-PDCCH or the RTS-C-PDCCH.

In another possible implementation, the network side may alternatively configure a start position of at least one field of each target terminal device. In this possible implementation, after S 110, the method further includes: obtaining RTS information corresponding to the first terminal from the first control information based on a first start position, where the first start position is a start position that is of the RTS information corresponding to the first terminal and that is in the first control information.

In the foregoing possible implementation, the first start position may be a start position of at least one of the following RTS information:
(1) the first indication information used to indicate duration of a channel occupancy time;
(2) the second indication information used to indicate QCL, where the QCL is QCL used by the transmission node for obtaining a channel on a shared spectrum;
(3) fourth indication information used to indicate whether the first terminal needs to return the CTS;
(4) resource indication information of the second physical control channel, for example, resource indication information of a CTS-PUCCH or a CTS-PDCCH, including at least one of the following: a monitoring time, a PRI, time-frequency resources, and the like;
(5) monitoring indication information of the third physical control channel, for example, PDCCH monitoring indication information, including at least one of the following: a PDCCH monitoring time, a search space ID, and the like; and
(6) sending indication information of the second physical control channel, for example, sending indication information of the CTS-PUCCH or the CTS-PDCCH, including at least one of the following: a format, spatial information (Spatial info), and the like that are of the second physical control channel.

In a possible implementation, in S214, the CTS information corresponding to the RTS information is sent by the first terminal on the second physical control channel in a case where at least one of the following is confirmed to be satisfied:
(1) that there is a request for transmission being determined based on the first control information, that is, the first terminal determines that the first terminal is one of the target terminal devices indicated by the RTS; and
(2) that there is no interference being determined.

In the foregoing possible implementation, that there is no interference being determined includes at least one of the following:
(1) the first control information being decoded successfully, that is, verification of CRC of the first control information being passed;
(2) after one or more times of energy-detection-based channel sensing, a channel sensing result indicating that a channel is idle, that is, in a case in which the first terminal determines that the first terminal is one of the plurality of target terminal devices, the first terminal may perform one or more times of energy-detection-based clear channel assessment (ED based CCA), and if the channel is idle, it is determined that there is no interference; and
(3) with interference estimation based on the first control information, that signal quality satisfies a pre-specified requirement being determined, where for example, an interference power or a signal to interference plus noise ratio (SINR) satisfies a specific condition.

In a possible implementation, after S214, the method may further include: monitoring data scheduled by the third physical control channel, where the third physical control channel is used to schedule data from the transmission node to the first terminal.

In a possible implementation, after S214, the method may further include: stopping monitoring the first physical control channel within a first time interval, where the first time interval is predefined, configured by the transmission node, or indicated by the first control information. To be specific, after receiving the RTS and sending the CTS on the second physical control channel, the first terminal stops monitoring the first physical control channel within the first time interval, where the first time interval may be the same as or different from the duration of the channel occupancy time indicated by the first control information, and may be specifically set based on actual applications.

In a possible implementation, when the third physical control channel is monitored, monitoring the third physical control channel is stopped outside the duration of the channel occupancy time indicated by the first control information. In other words, in this possible implementation, the first terminal can only monitor the third physical control channel within the duration of the channel occupancy time indicated by the first control information.

In the foregoing possible implementation, a time domain monitoring position of the third physical control channel may be determined by using at least one of the following:
(1) an absolute time domain monitoring position of a configured target search space, where the target search space is a search space in which the third physical control channel is located;
(2) a relative time domain monitoring position of the configured target search space relative to the first physical control channel or the second physical control channel, where the target search space is a search space in which the third physical control channel is located; and
(3) a relative time domain monitoring position of the target search space, indicated by the first physical control channel, relative to the first physical control channel or the second physical control channel, where the target search space is a search space in which the third physical control channel is located. To be specific, in this possible implementation, the network side may indicate, on the first physical control channel, a position of the target search space of the third physical control channel, where the position is a relative time domain monitoring position relative to the first physical control channel or the second physical control channel. In this possible implementation, other than time domain configuration of the third physical control channel, other configuration of the third physical control channel may refer to configuration of a search space of an RTS-PDCCH or search space configuration indicated by the RTS-GC-PDCCH, the RTS-C-PDCCH, or the UE-specific PDCCH.

In this embodiment of the present invention, the third physical control channel may be in a format similar to that of a PDCCH. Therefore, in a possible implementation, the third physical control channel may include a PDCCH for scheduling data (Scheduling PDCCH, S-PDCCH).

In a possible implementation, the monitoring configuration information of the first physical control channel and/or the configuration information of the second physical control channel may be dynamically configured by the network side. Therefore, in this possible implementation, before S210, the method may further include at least one of the following:
(1) receiving monitoring configuration information of the first physical control channel; and
(2) receiving configuration information of the second physical control channel.

In the foregoing possible implementation, the monitoring configuration information of the first physical control channel includes, but is not limited to, at least one of the following:
(1) an RTS-specific RNTI, that is, an RNTI specific for RTS (RTS-RNTI);
(2) start positions of RTS information, in the first control information, of each target terminal device;
(3) a size of the first control information, that is, a size (size) of the first control information transmitted on the RTS-GC-PDCCH, the C-PDCCH, or the UE-specific PDCCH;
(4) a target search space, where the target search space corresponds to a format of the first control information, LTE may determine the format of the first control information based on the target search space, and optionally, the target search space corresponds to the format of the first control information that is for RTS transmission, where in a possible implementation, the first control information may be in a same format as that of an existing downlink control information (DCI), for example, DCI 0_0, DCI 0_1, DCI 1_0, or DCI 1_1, or may be in a newly defined DCI format specific for RTS transmission, that is, RTS DCI; and in this possible implementation, the network side may indicate the format of the first control information through the target search space. For example, UE may agree with the network side in advance upon a format of the first control information corresponding to each search space. The network side indicates the target search space for transmitting the first physical control information when configuring the monitoring configuration information of the first physical control channel. Through the target search space, the UE can determine the format of the first control information transmitted by the network side; and
(5) fifth indication information, where the fifth indication information is used to indicate whether the target search space is only used for transmission on the first physical control channel. That is, the target search space may be only used for RTS-PDCCH transmission, or may also be used for other information, which may be specifically indicated by the network side.

In the foregoing possible implementation, the configuration information of the second physical control channel may include the sending indication information of the second physical control channel, which may refer to the foregoing specific related descriptions. Details are not provided herein again.

In this embodiment of the present invention, the transmission node includes one of the following: a base station, a second terminal (for example, a relay terminal having the relaying capability), and a Wi-Fi access point.

The technical solution provided in this embodiment of the present invention can solve a problem of information exchange during channel access using a shared spectrum in NR, so that a transmission node and UE can complete RTS/CTS handshaking. A device that has not completed RTS/CTS handshaking will not try transmitting. In this way, interference during transmission by using the shared spectrum is reduced.

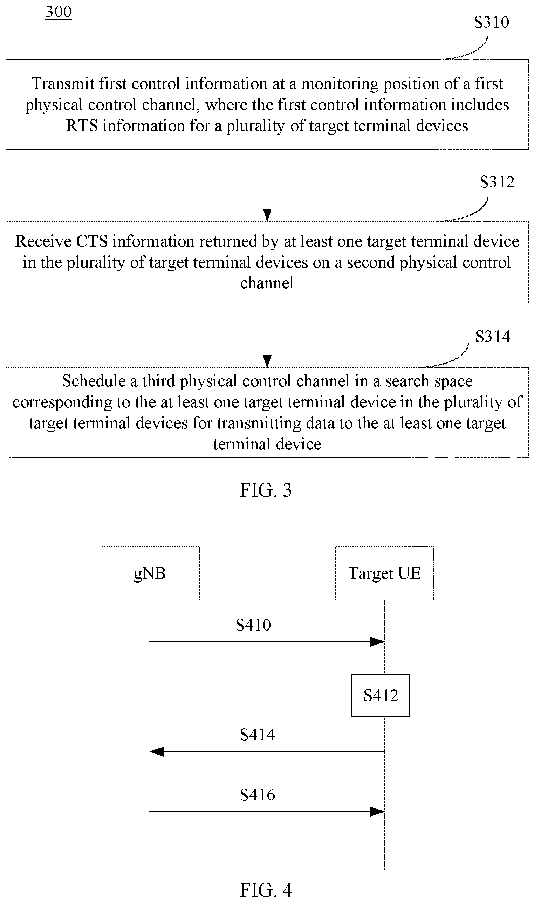

FIG. 3 is a schematic flowchart of an information transmission method according to an embodiment of the present invention. The method 300 may be performed by a transmission node. In other words, the method may be performed by software or hardware installed on the transmission node. As shown in FIG. 3, the method may include the following steps.

S310: transmitting first control information at a monitoring position of a first physical control channel, where the first control information includes RTS information for a plurality of target terminal devices.

In this embodiment of the present invention, when scheduling data requirements of one or more target terminals, the transmission node (for example, a base station) transmits, at the monitoring position of the first physical control channel of the target terminal, the first control information including the RTS information for the plurality of target terminal devices.

In this embodiment of the present invention, for related information, a format, and the like included in the first control information, refer to descriptions in the method 200. Details are not provided herein again.

In a possible implementation, to ensure that a current shared spectrum is idle, before S310, the method may further include: performing LBT to determine whether a channel is idle. In a case in which the channel is determined to be idle, S310 is performed.

S312: receiving CTS information returned by at least one target terminal device in the plurality of target terminal devices on a second physical control channel.

In this embodiment of the present invention, a target terminal device that receives the RTS information may return the CTS information to the transmission node on the second physical control channel. In a possible implementation, the target terminal device may obtain the first control information transmitted on the first physical control channel in a manner described in the method 200, and return the CTS information to the transmission node based on the RTS information in the first control information, which may refer to specific related descriptions in the method 200. Details are not provided herein again.

In this embodiment of the present invention, the second physical control channel includes a CTS PUCCH or a CTS PDCCH.

In S312, the transmission node may determine a monitoring position on the second physical control channel based on a resource of the second physical control channel, so as to monitor, at the monitoring position, the CTS sent by the target terminal devices.

In a possible implementation, the resource of the second physical control channel may be predefined, that is, the resource of the second physical control channel is pre-specified in a communications system.

In another possible implementation, the resource of the second physical control channel may be configured by the transmission node. For example, a base station may first send configuration information of the second physical control channel to the target terminal devices, and then indicate the resource of the second physical control channel based on the configuration information.

In still another possible implementation, the resource of the second physical control channel may alternatively be indicated to the target terminal devices by using the first control information, so that the target terminal devices can send the CTS at time-frequency positions corresponding to the resource.

S314: Scheduling a third physical control channel in a search space corresponding to the at least one target terminal device in the plurality of target terminal devices for transmitting data to the at least one target terminal device.

In this embodiment of the present invention, the third physical control channel may include a PDCCH for scheduling data (that is, S-PDCCH).

In a possible implementation, before S310, the method may further include at least one of the following:
(1) sending monitoring configuration information of the first physical control channel to the target terminal devices; and
(2) sending configuration information of the second physical control channel to the target terminal devices.

The monitoring configuration information of the first physical control channel and the configuration information of the second physical control channel are the same as those described in the method 200, and reference may be made to the specific descriptions in the method 200. Details are not provided herein again.

In this embodiment of the present invention, as described in the method 200, the first physical control channel includes at least one of the following: an RTS-GC-PDCCH, an RTS-C-PDCCH, and an RTS-UE-Specific PDCCH. Reference may be made to the specific related descriptions in the method 200. Details are not provided herein again.

According to the technical solution provided in this embodiment of the present invention, the transmission node can transmit the first control information including the RTS information for the plurality of target terminal devices at the monitoring position of the first physical control channel, receive the CTS information returned by one or more target terminals on the second physical control channel, and then schedule the third physical control channel in a search space corresponding to the one or more target terminal devices to transmit data to the target terminal device. Therefore, by the RTS/CTS handshaking mechanism, data transmission on the shared spectrum is completed. A device that has not completed RTS/CTS handshaking will not try transmitting. In this way, interference during transmission by using the shared spectrum is reduced.

FIG. 4 is another schematic flowchart of an information transmission method according to an embodiment of the present invention. The method 400 may be performed by a base station and a terminal device. In other words, the method may be performed by software or hardware installed on the base station and the terminal device. As shown in FIG. 4, the method may include the following steps.

S410: The base station sends first control information including RTS information to a plurality of target UEs on the first physical control channel.

For example, gNB may send the RTS to the plurality of LTEs on an RTS-GC-PDCCH, an RTS-C-PDCCH, or a UE-specific PDCCH. The RTS may be entirely carried on the RTS-GC-PDCCH or the RTS-C-PDCCH, or partially carried on the RTS-GC-PDCCH or the RTS-C-PDCCH and partially carried on the RTS-UE-specific PDCCH.

S412: The target UEs monitor the first physical control channel to obtain the first control information transmitted on the first physical control channel.

This step is the same as S212 in the method 200. Reference may be made to the specific descriptions in the method 200.

S414: The target UEs send CTS information on a second physical control channel based on the RTS information in the first control information.

For example, the target UEs may transmit the CTS in a PUCCH.

This step is the same as S214 in the method 200. Reference may be made to the specific descriptions in S214 of the method 200.

In a possible implementation, a channel occupancy time may be carried in the CTS sent by the UE. The channel occupancy time is equal to a channel occupancy time sent by the gNB minus a time for signal transmission, demodulation, and the like, that is, end positions of channel occupancy times in the RTS and the CTS are the same.

In another possible implementation, UE information may be further carried in the CTS, so that the gNB can learn about the UE that sends the CTS, and therefore can perform, based on the received CTS, data scheduling for the UE that has sent the CTS.

S416: After receiving the CTS information sent by the target LTEs, the base station schedules, on an S-PDCCH, data transmitted to the target UEs.

This step is the same as S314 in the method 300. Reference may be made to the specific descriptions in S314 of the method 300.

In this embodiment of the present invention, the RTS sent by the base station may at least include a channel occupancy time, that is, NAV or COT, and a time during which a channel needs to be occupied can be notified to surrounding nodes based on the information.

When the base station sends the RTS to the plurality of LTEs on an RTS-PDCCH, all LTE that receives the RTS-PDCCH may send the CTS to the gNB as a response. However, not all the UE that receives the RTS-PDCCH is scheduled every time. Therefore, UE that is not scheduled does not need to send the CTS. To prevent such unnecessary CTS transmission, in a possible implementation, the LTE information may be carried on the RTS-PDCCH, and the LTE information indicates UE that needs to return the CTS. The UE that receives the RTS-PDCCH determines, based on the UE information carried on the RTS-PDCCH, whether to send the CTS. To be specific, if the UE information in the RTS-PDCCH includes information about UE, for example, a UE ID, or includes a C-RNTI, a group ID of the UE, or the like, the UE transmits the CTS to the gNB. When the RTS is sent to the plurality of UEs, the UE information may be a UE ID list, including IDs of all UE that needs to send the CTS, or may be a bitmap, where each bit corresponds to each LTE in a group.

In a possible implementation, in order to transmit the CTS on a PUCCH, the UE needs to learn about resource information of the PUCCH, and therefore, information about a format, information about a time domain position, and a PUCCH resource indicator (PRI) of the PUCCH may be carried in the RTS, that is, the RTS-PDCCH. Each UE corresponds to resource information of a group of PUCCHs. When the gNB sends the RTS to the plurality of LTEs, resource information of a plurality of groups of PUCCHs may be carried in the RTS-PDCCH.

In another possible implementation, if the LTE transmits the CTS on a channel similar to the PDCCH, information about time-frequency resources allocated to the PDCCH used by the UE may further be carried in the RTS.

In a possible implementation, spatial relation information (SpatialRelationinfo) about CTS transmission by the UE may further be carried in the RTS. For example, a reference resource ID (reference resource id, that may correspond to an index of a reference resource (reference resource)).

In a possible implementation, information about S-PDCCH detection may further be carried on the RTS-PDCCH, and a corresponding monitoring position, a search space ID, and the like are notified to the UE.

In a possible implementation, a time domain position of a PDCCH for sending the RTS may be pre-configured or predefined. The LTE performs detection at a pre-configured monitoring position of the PDCCH. After detecting the RTS, the LTE sends the CTS based on the information carried in the RTS. A time domain position of a PUCCH for sending the CTS may be as described in the method 200, and is carried in the RTS, or may be associated with the position of the PDCCH for sending the RTS and determined based on an offset configured through high-layer signaling. In addition, sending of the CTS may further depend on a channel status. UE may perform CCA before sending the CTS, and send the CTS when a channel is detected to be idle, otherwise the CTS is not sent.

In a possible implementation, after receiving the RTS and/or sending the CTS, the UE starts detecting a PDCCH that schedules a PDSCH or a PUSCH. A detecting position of the scheduling PDCCH may be configured through high-layer signaling, or may be indicated by the RTS, or may be determined based on a offset relative to a position that is configured through high-layer signaling and that is of the PDCCH for sending the RTS or the PUCCH for sending the CTS.

The technical solution provided in this embodiment of the present invention can solve a problem of information exchange during channel access using a shared spectrum in NR, so that a base station and UE can complete handshaking, and transmission interference on the shared spectrum is reduced.

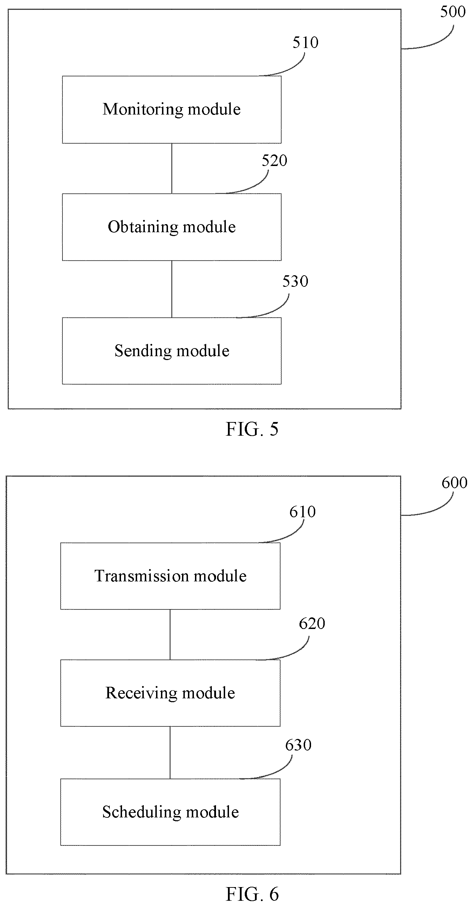

FIG. 5 is a schematic structural diagram of a terminal device according to an embodiment of the present invention. As shown in FIG. 5, the terminal device 500 includes: a monitoring module 510, configured to monitor a first physical control channel based on monitoring configuration information of the first physical control channel; an obtaining module 520, configured to obtain first control information transmitted by a transmission node on the first physical control channel, where the first control information includes request to send RTS information for a plurality of target terminal devices, and the plurality of target terminal devices include the terminal device; and a sending module 530, configured to send confirm to send CTS information on a second physical control channel based on the RTS information.

In a possible implementation, the first control information includes at least one of the following: common indication domain and user indication domain.

In a possible implementation, the common indication domain includes at least one of the following: first indication information used to indicate duration of a channel occupancy time; second indication information used to indicate quasi-colocation QCL, where the QCL is QCL used by the transmission node for obtaining a channel on a shared spectrum; and third indication information used to indicate a target terminal device that has a request for transmission.

In a possible implementation, the third indication information includes one of the following: a list of identification information of the target terminal devices, where the identification information of the target terminal devices includes radio network temporary identifiers RNTI of the target terminal devices or identifiers that are configured by the target terminal devices and that are in a terminal device group; and a bitmap, where each bit in the bitmap is used to indicate whether one terminal device or one group of terminal devices is the target terminal devices.

In a possible implementation, the user indication domain includes at least one of the following: resource indication information of the second physical control channel; monitoring indication information of a third physical control channel, where the third physical control channel is used to schedule data from the transmission node to the terminal device; and sending indication information of the second physical control channel.

In a possible implementation, the first physical control channel includes at least one of the following: an RTS group common physical downlink control channel RTS-GC-PDCCH; an RTS common physical downlink control channel RTS-C-PDCCH; and an RTS UE-specific physical downlink control channel RTS-UE-Specific PDCCH.

In a possible implementation, the common indication domain is carried on the RTS-GC-PDCCH or the RTS-C-PDCCH, and/or the user indication domain is carried on the RTS-UE-specific PDCCH.

In a possible implementation, both the common indication domain and the user indication domain are carried on the RTS-GC-PDCCH or the RTS-C-PDCCH.

In a possible implementation, the obtaining module 520 is further configured to: after the first control information transmitted on the first physical control channel is obtained, obtain RTS information corresponding to a first terminal from the first control information based on a first start position, where the first start position is a start position that is of the RTS information corresponding to the first terminal and that is in the first control information.

In a possible implementation, the RTS information includes at least one of the following: first indication information used to indicate duration of a channel occupancy time; second indication information used to indicate quasi-colocation QCL, where the QCL is QCL used by the transmission node for obtaining a channel on a shared spectrum; and fourth indication information used to indicate whether the first terminal needs to return the CTS; resource indication information of the second physical control channel; monitoring indication information of a third physical control channel, where the third physical control channel is used to schedule data from the transmission node to the terminal device; and sending indication information of the second physical control channel.

In a possible implementation, that the confirm to send CTS information is sent on the second physical control channel based on the RTS information includes: the CTS information corresponding to the RTS information is sent on the second physical control channel in a case where at least one of the following is confirmed to be satisfied: that there is a request for transmission being determined based on the first control information; and that there is no interference being determined.

In a possible implementation, that there is no interference being determined includes at least one of the following: the first control information being decoded successfully; after one or more times of energy-detection-based channel sensing, a channel sensing result indicating that a channel is idle; and with interference estimation based on the first control information, that signal quality satisfies a pre-specified requirement being determined.

In a possible implementation, the monitoring module 510 is further configured to: after the CTS information is sent on the second physical control channel, monitor data scheduled by the third physical control channel, where the third physical control channel is used to schedule data from the transmission node to the first terminal.

In a possible implementation, the monitoring module 510 is further configured to: after the CTS information is sent on the second physical control channel, stop monitoring the first physical control channel within a first time interval, where the first time interval is predefined, configured by the transmission node, or indicated by the first control information.

In a possible implementation, the monitoring module 510 is further configured to stop monitoring the third physical control channel outside the duration of the channel occupancy time indicated by the first control information.

In a possible implementation, a time domain monitoring position of the third physical control channel is determined by using at least one of the following: an absolute time domain monitoring position of a configured target search space, where the target search space is a search space in which the third physical control channel is located; a relative time domain monitoring position of the configured target search space relative to the first physical control channel or the second physical control channel; and a relative time domain monitoring position of the target search space, indicated by the first physical control channel, relative to the first physical control channel or the second physical control channel.

In a possible implementation, the third physical control channel includes a PDCCH for scheduling data.

In a possible implementation, the second physical control channel includes a CTS physical uplink control channel PUCCH or a CTS PDCCH.

In a possible implementation, the terminal further includes a receiving module, configured to receive, before the first physical control channel is monitored, at least one of the following: receiving monitoring configuration information of the first physical control channel; and receiving configuration information of the second physical control channel.

In a possible implementation, the monitoring configuration information includes at least one of the following: an RTS-specific RNTI; start positions of RTS information, in the first control information, of each target terminal device; a size of the first control information; a target search space, where the target search space corresponds to a format of the first control information; and fifth indication information, where the fifth indication information is used to indicate whether the target search space is only used for transmission on the first physical control channel.

In a possible implementation, the transmission node includes one of the following: a base station, a second terminal, and a Wi-Fi access point.

The terminal provided in this embodiment of the present invention can implement the processes implemented by the terminal device or the first terminal in the method embodiments in FIG. 1 to FIG. 4, and same effects can be achieved. To avoid repetition, details are not described herein again.

FIG. 6 is a schematic structural diagram of a transmission node according to an embodiment of the present invention. As shown in FIG. 6, the transmission node 600 includes: a transmission module 610, configured to transmit first control information at a monitoring position of a first physical control channel, where the first control information includes RTS information for a plurality of target terminal devices; a receiving module 620, configured to receive CTS information returned by at least one target terminal device in the plurality of target terminal devices on a second physical control channel; and a scheduling module 630, configured to schedule a third physical control channel in a search space corresponding to the at least one target terminal device in the plurality of target terminal devices for data transmission to the at least one target terminal device.

In a possible implementation, the transmission node further includes a determining module, configured to: before the first control information is transmitted, perform listen before talk LBT to determine whether a channel is idle.

In a possible implementation, a resource of the second physical control channel is predefined, or configured or indicated by the transmission node.

In a possible implementation, the transmitting module 610 is further configured to: send, before the first control information is transmitted, at least one of the following: sending monitoring configuration information of the first physical control channel to the target terminal devices; and sending configuration information of the second physical control channel to the target terminal devices.

In a possible implementation, the first physical control channel includes at least one of the following: an RTS group common physical downlink control channel RTS-GC-PDCCH; an RTS common physical downlink control channel RTS-C-PDCCH; and an RTS UE-specific physical downlink control channel RTS-UE-Specific PDCCH.

In a possible implementation, the second physical control channel includes at least one of the following: a CTS physical uplink control channel PUCCH or a CTS PDCCH.

The transmission node provided in this embodiment of the present invention can implement processes implemented by the transmission node or the base station in the method embodiments of FIG. 1 to FIG. 4, and same effects can be achieved. To avoid repetition, details are not described herein again.

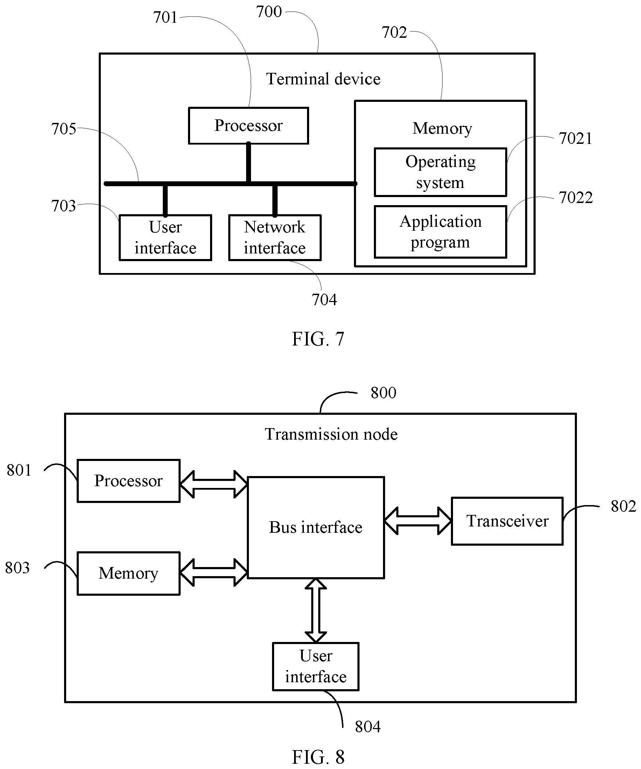

FIG. 7 is a block diagram of a terminal device according to another embodiment of the present invention. As shown in FIG. 7, the terminal device 700 includes at least one processor 701, a memory 702, at least one network interface 704, and a user interface 703. All components in the terminal device 700 are coupled together through a bus system 705. It can be understood that the bus system 705 is configured to implement connection and communication between these components. In addition to a data bus, the bus system 705 further includes a power bus, a control bus, and a status signal bus. However, for clear description, various buses are marked as the bus system 705 in FIG. 7.

The user interface 703 may include a display, a keyboard, a clicking device (for example, a mouse, a trackball (trackball)), a touch panel, a touchscreen, or the like.

It may be understood that the memory 702 in this embodiment of the present invention may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of exemplary but not restrictive descriptions, there are many forms of available RAMs, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch Link DRAM, SLDRAM), and a direct rambus random access memory (Direct Rambus RAM, DRRAM). The memory 702 in the system and method described in the embodiments of the present invention is intended to include, but is not limited to, these and any other suitable type of memory.

In some implementations, the memory 702 stores the following elements: an executable module or a data structure, or a subset thereof, or an extension set thereof: an operating system 7021 and an application program 7022.

The operating system 7021 includes various system programs, for example, a framework layer, a kernel library layer, and a driver layer, and is configured to implement various basic services and process a hardware-based task. The application program 7022 includes various application programs, for example, a media player (Media Player) and a browser (Browser), and is used to implement various application services. A program for implementing the method in this embodiment of the present invention may be included in the application program 7022.

In this embodiment of the present invention, the terminal device 700 further includes a computer program stored in the memory 702 and executable on the processor 701. When the computer program is executed by the processor 701, the following steps are implemented:
monitoring a first physical control channel based on monitoring configuration information of the first physical control channel;
obtaining first control information transmitted by a transmission node on the first physical control channel, where the first control information includes request to send RTS information for a plurality of target terminal devices, and the plurality of target terminal devices include the first terminal; and
sending confirm to send CTS information on a second physical control channel based on the RTS information.

The methods disclosed in the foregoing embodiments of the present invention may be applied to the processor 701 or implemented by the processor 701. The processor 701 may be an integrated circuit chip having a signal processing capability. During implementation, each step of the foregoing methods may be completed by using an integrated logic circuit of hardware in the processor 701 or an instruction in a form of software. The processor 701 may be a general-purpose processor, a digital signal processor (Digital Signal Processor, DSP), an application-specific integrated circuit (Application Specific Integrated Circuit, ASIC), a field programmable gate array (Field Programmable Gate Array, FPGA), or another programmable logic device, a discrete gate or transistor logic device, or a discrete hardware component. The methods, steps, and logical block diagrams disclosed in the embodiments of the present invention may be implemented or executed. The general-purpose processor may be a microprocessor, or the processor may be any conventional processor or the like. The steps of the methods disclosed with reference to the embodiments of the present invention may be directly performed by a hardware decoding processor, or may be performed by using a combination of hardware and software modules in a decoding processor. The software module may be located in a random access memory, a flash memory, a read-only memory, a programmable read-only memory, an electrically erasable programmable memory, a register, or another computer-readable storage medium that is mature in the art. The computer-readable storage medium is located in the memory 702, and the processor 701 reads information in the memory 702 and completes the steps in the foregoing methods in combination with hardware of the processor. Specifically, the computer-readable storage medium stores a computer program, and when the computer program is executed by the processor 701, steps of the method 300 are implemented.

It may be understood that the embodiments described in the embodiments of the present invention may be implemented by hardware, software, firmware, middleware, microcode, or a combination thereof. For implementation with hardware, a processing unit may be implemented in one or more application specific integrated circuits (Application Specific Integrated Circuit, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions in the present invention, or a combination thereof.

For software implementations, the techniques described in embodiments of the present invention may be implemented by modules (for example, processes or functions) that perform the functions described in the embodiments of the present invention. A software code may be stored in the memory and executed by the processor. The memory may be implemented in the processor or outside the processor.

The terminal device 700 can implement processes implemented by the terminal device or the first terminal in FIG. 1 to FIG. 4. To avoid repetition, details are not described herein again.

Refer to FIG. 8. FIG. 8 is a structural diagram of a transmission node to which an embodiment of the present invention is applied, where the transmission node can implement, as a transmission node or a base station, details in FIG. 1 to FIG. 4, and same effects can be achieved. As shown in FIG. 8, the transmission node 800 includes: a processor 801, a transceiver 802, a memory 803, a user interface 804, and a bus interface.

In this embodiment of the present invention, the transmission node 800 further includes a computer program stored in the memory 803 and executable on the processor 801. When the computer program is executed by the processor 801, the following steps are performed:
transmitting first control information at a monitoring position of a first physical control channel, where the first control information includes RTS information for a plurality of target terminal devices;
receiving CTS information returned by at least one target terminal device in the plurality of target terminal devices on a second physical control channel; and
scheduling a third physical control channel in a search space corresponding to the at least one target terminal device in the plurality of target terminal devices for transmitting data to the at least one target terminal device.

In FIG. 8, a bus architecture may include any quantity of interconnected buses and bridges, and is specifically linked by various circuits of one or more processors represented by the processor 801 and a memory represented by the memory 803. The bus architecture may further link various other circuits, such as a peripheral device, a voltage regulator, and a power management circuit, together. These are all well-known in the art, and therefore are not further described in this specification. The bus interface provides interfaces. The transceiver 802 may be a plurality of elements, in other words, includes a transmitter and a receiver, and provides units configured to communicate with various other apparatuses on a transmission medium. For different user equipment, the user interface 804 may further be an interface that can be externally or internally connected to a required device. The connected device includes, but is not limited to, a keypad, a display, a loudspeaker, a microphone, a joystick, and the like.

The processor 801 is responsible for managing the bus architecture and common processing, and the memory 803 may store data used when the processor 801 performs an operation.

The transmission node 800 can implement the processes implemented by the transmission node or the base station in FIG. 1 to FIG. 4, and same effects can be achieved. To avoid repetition, details are not described herein again.

The embodiments of the present invention further provide a computer-readable storage medium. The computer-readable storage medium stores a computer program, and when the computer program is executed by a processor, processes performed by the base station or the terminal device in the embodiments shown in FIG. 1 to FIG. 5 are implemented, and same technical effects can be achieved. To avoid repetition, details are not described herein. The computer-readable storage medium is, for example, a read-only memory (Read-Only Memory, ROM for short), a random access memory (Random Access Memory, RAM for short), a magnetic disk, or an optical disc.

It should be noted that, in this specification, the terms "include", "include", or any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "include/include a ..." does not, without more constraints, preclude the presence of additional identical elements in the process, method, article, or apparatus that includes the element.

Based on the descriptions of the foregoing implementations, those skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present invention essentially or the part contributing to the prior art may be implemented in a form of a software product. The computer software product is stored in a storage medium (for example, a ROM/RAM, a hard disk, or an optical disc), and includes several instructions for instructing a terminal (which may be a mobile phone, a computer, a server, an air conditioner, a network device, or the like) to perform the methods described in the embodiments of the present invention.

The embodiments of the present invention are described with reference to the accompanying drawings. However, the present invention is not limited to the foregoing specific implementations. The foregoing specific implementations are merely examples, but are not limiting. Those of ordinary skill in the art may make many forms without departing from the objective and the scope of the claims of the present invention, and these forms all fall within the protection scope of the present invention.

## Claims

1. A transmission confirmation method, applied to a first terminal and comprising:
monitoring a first physical control channel based on monitoring configuration information of the first physical control channel;
obtaining first control information transmitted by a transmission node on the first physical control channel, wherein the first control information comprises request to send RTS information for a plurality of target terminal devices, and the plurality of target terminal devices comprise the first terminal; and
sending confirm to send CTS information on a second physical control channel based on the RTS information.

2. The method according to claim 1, wherein the first control information comprises at least one of following: common indication domain and user indication domain.

3. The method according to claim 2, wherein the common indication domain comprises at least one of following:
first indication information used to indicate duration of a channel occupancy time;
second indication information used to indicate quasi-colocation QCL, wherein the QCL is QCL used by the transmission node for obtaining a channel on a shared spectrum; and
third indication information used to indicate the target terminal devices having a request for transmission.

4. The method according to claim 3, wherein the third indication information comprises one of following:
a list of identification information of the target terminal devices, wherein the identification information of the target terminal devices comprises radio network temporary identifiers RNTI of the target terminal devices or identifiers that are configured by the target terminal devices and that are in a terminal device group; and
a bitmap, wherein each bit in the bitmap is used to indicate whether one terminal device or one group of terminal devices is the target terminal devices.

5. The method according to claim 2, wherein the user indication domain comprises at least one of following:
resource indication information of the second physical control channel;
monitoring indication information of a third physical control channel, wherein the third physical control channel is used to schedule data from the transmission node to the terminal devices; and
sending indication information of the second physical control channel.

6. The method according to any one of claims 2 to 5, wherein the first physical control channel comprises at least one of following:
an RTS group common physical downlink control channel RTS-GC-PDCCH;
an RTS common physical downlink control channel RTS-C-PDCCH; and
an RTS UE-specific physical downlink control channel RTS-UE-Specific PDCCH.

7. The method according to claim 6, wherein the common indication domain is carried on the RTS-GC-PDCCH or the RTS-C-PDCCH, and/or the user indication domain is carried on the RTS-UE-specific PDCCH.

8. The method according to claim 6, wherein the common indication domain and the user indication domain are carried on the RTS-GC-PDCCH or the RTS-C-PDCCH.

9. The method according to claim 1, wherein after the obtaining first control information transmitted by a transmission node on the first physical control channel, the method further comprises:
obtaining RTS information corresponding to the first terminal from the first control information based on a first start position, wherein the first start position is a start position that is of the RTS information corresponding to the first terminal and that is in the first control information.

10. The method according to claim 9, wherein the RTS information comprises at least one of following:
first indication information used to indicate duration of a channel occupancy time;
second indication information used to indicate quasi-colocation QCL, wherein the QCL is QCL used by the transmission node for obtaining a channel on a shared spectrum; and
fourth indication information used to indicate whether the first terminal needs to return the CTS;
resource indication information of the second physical control channel;
monitoring indication information of a third physical control channel, wherein the third physical control channel is used to schedule data from the transmission node to the terminal devices; and
sending indication information of the second physical control channel.

11. The method according to claim 1, wherein the sending confirm to send CTS information on a second physical control channel based on the RTS information comprises:
sending the CTS information corresponding to the RTS information on the second physical control channel in a case where at least one of following is confirmed to be satisfied:
that there is a request for transmission being determined based on the first control information; and
that there is no interference being determined.

12. The method according to claim 11, wherein that there is no interference being determined comprises at least one of following:
the first control information being decoded successfully;
after one or more times of energy-detection-based channel sensing, a channel sensing result indicating that a channel is idle; and
with interference estimation based on the first control information, that signal quality satisfies a pre-specified requirement being determined.

13. The method according to claim 1, wherein after the sending confirm to send CTS information on a second physical control channel, the method further comprises:
monitoring data scheduled by a third physical control channel, wherein the third physical control channel is used to schedule data from the transmission node to the first terminal.

14. The method according to claim 13, wherein after the sending confirm to send CTS information on a second physical control channel, the method further comprises:
stopping monitoring the first physical control channel within a first time interval, wherein the first time interval is predefined, configured by the transmission node, or indicated by the first control information.

15. The method according to claim 13, further comprising:
stopping monitoring the third physical control channel outside the duration of the channel occupancy time indicated by the first control information.

16. The method according to claim 13, wherein a time domain monitoring position of the third physical control channel is determined by using at least one of following:
an absolute time domain monitoring position of a configured target search space, wherein the target search space is a search space in which the third physical control channel is located;
a relative time domain monitoring position of the configured target search space relative to the first physical control channel or the second physical control channel; and
a relative time domain monitoring position of the target search space, indicated by the first physical control channel, relative to the first physical control channel or the second physical control channel.

17. The method according to claim 13, wherein the third physical control channel comprises a PDCCH for scheduling data.

18. The method according to claim 1, wherein the second physical control channel comprises a CTS physical uplink control channel PUCCH or a CTS PDCCH.

19. The method according to any one of claims 1 to 5 and 7 to 18, wherein before the monitoring a first physical control channel, the method further comprises at least one of following:
receiving monitoring configuration information of the first physical control channel; and
receiving configuration information of the second physical control channel.

20. The method according to claim 19, wherein the monitoring configuration information comprises at least one of following:
an RTS-specific RNTI;
start positions of RTS information, in the first control information, of each target terminal device;
a size of the first control information;
a target search space, wherein the target search space corresponds to a format of the first control information; and
fifth indication information, wherein the fifth indication information is used to indicate whether the target search space is only used for transmission on the first physical control channel.

21. The method according to any one of claims 1 to 5 and 7 to 18, wherein the transmission node comprises one of following: a base station, a second terminal, and a Wi-Fi access point.

22. An information transmission method, applied to a transmission node and comprising:
transmitting first control information at a monitoring position of a first physical control channel, wherein the first control information comprises RTS information for a plurality of target terminal devices;
receiving CTS information returned by at least one target terminal device in the plurality of target terminal devices on a second physical control channel; and
scheduling a third physical control channel in a search space corresponding to the at least one target terminal device in the plurality of target terminal devices for data transmission to the at least one target terminal device.

23. The method according to claim 22, wherein before the transmitting first control information, the method further comprises:
performing listen before talk LBT to determine whether a channel is idle.

24. The method according to claim 22, wherein a resource of the second physical control channel is predefined, or configured or indicated by the transmission node.

25. The method according to any one of claims 22 to 24, wherein before the transmitting first control information, the method further comprises at least one of following:
sending monitoring configuration information of the first physical control channel to the target terminal devices; and
sending configuration information of the second physical control channel to the target terminal devices.

26. The method according to any one of claims 22 to 24, wherein the first physical control channel comprises at least one of following:
an RTS group common physical downlink control channel RTS-GC-PDCCH;
an RTS common physical downlink control channel RTS-C-PDCCH; and
an RTS UE-specific physical downlink control channel RTS-UE-Specific PDCCH.

27. The method according to any one of claims 22 to 24, wherein the second physical control channel comprises at least one of following:
a CTS physical uplink control channel PUCCH or a CTS PDCCH.

28. A terminal device, comprising:
a monitoring module, configured to monitor a first physical control channel based on monitoring configuration information of the first physical control channel;
an obtaining module, configured to obtain first control information transmitted by a transmission node on the first physical control channel, wherein the first control information comprises request to send RTS information for a plurality of target terminal devices, and the plurality of target terminal devices comprise the terminal device; and
a sending module, configured to send confirm to send CTS information on a second physical control channel based on the RTS information.

29. The terminal device according to claim 28, wherein the first control information comprises at least one of following: common indication domain and user indication domain.

30. The terminal device according to claim 29, wherein the common indication domain comprises at least one of following:
first indication information used to indicate duration of a channel occupancy time;
second indication information used to indicate quasi-colocation QCL, wherein the QCL is QCL used by the transmission node for obtaining a channel on a shared spectrum; and
third indication information used to indicate the target terminal devices having a request for transmission.

31. The terminal device according to claim 29, wherein the user indication domain comprises at least one of following:
resource indication information of the second physical control channel;
monitoring indication information of a third physical control channel, wherein the third physical control channel is used to schedule data from the transmission node to the terminal device; and
sending indication information of the second physical control channel.

32. The terminal device according to claim 28, wherein the obtaining module is further configured to: after the first control information transmitted on the first physical control channel is obtained, obtain RTS information corresponding to the first terminal from the first control information based on a first start position, wherein the first start position is a start position that is of the RTS information corresponding to the first terminal and that is in the first control information.

33. The terminal device according to claim 28, wherein the monitoring module is further configured to monitor data scheduled by a third physical control channel, wherein the third physical control channel is used to schedule data from the transmission node to the first terminal.

34. The terminal device according to claim 33, wherein the monitoring module is further configured to: after the CTS information is sent on the second physical control channel, stop monitoring the first physical control channel within a first time interval, wherein the first time interval is predefined, configured by the transmission node, or indicated by the first control information.

35. The terminal device according to claim 33, wherein the monitoring module is further configured to stop monitoring the third physical control channel outside the duration of the channel occupancy time indicated by the first control information.

36. A transmission node, comprising:
a transmission module, configured to transmit first control information at a monitoring position of a first physical control channel, wherein the first control information comprises RTS information for a plurality of target terminal devices;
a receiving module, configured to receive CTS information returned by at least one target terminal device in the plurality of target terminal devices on a second physical control channel; and
a scheduling module, configured to schedule a third physical control channel in a search space corresponding to the at least one target terminal device in the plurality of target terminal devices for data transmission to the at least one target terminal device.

37. The transmission node according to claim 36, further comprising:
a determining module, configured to: before the first control information is transmitted by the transmission module, perform listen before talk LBT to determine whether a channel is idle.

38. A terminal device, comprising a memory, a processor, and a computer program stored in the memory and executable on the processor, wherein when the computer program is executed by the processor, steps of the method according to any one of claims 1 to 21 are implemented.

39. A transmission node, comprising a memory, a processor, and a computer program stored in the memory and executable on the processor, wherein when the computer program is executed by the processor, steps of the method according to any one of claims 22 to 27 are implemented.

40. A computer-readable storage medium, wherein the computer-readable storage medium stores a computer program, and the computer program is executed by a processor,
steps of the method according to any one of claims 1 to 21 are implemented; or
steps of the method according to any one of claims 22 to 27 are implemented.
